# EUROPEAN PATENT APPLICATION

(11) **EP 2 698 068 A1**
(43) Date of publication of application: **19.02.2014**
(21) Application number: 12180706.9
(22) Date of filing: 16.08.2012
(51) Int. Cl.: A23L 1/168, A23L 1/182

(54) **New method for making fast cooking rice**

(71) Applicant: Nederlandse Organisatie voor Toegepast -Natuurwetenschappelijk Onderzoek TNO, 2628 VK Delft (NL)
(72) Inventor: Essers, Maurice Karel Hubertina, 2628 VK Delft (NL); Hübner, Florian, 2628 VK Delft (NL); van Deventer, Hendricus Cornelis, 2628 VK Delft (NL); Slaghek, Theodoor Maximiliaan, 2628 VK Delft (NL); Jetten, Jan Matthijs, 2628 VK Delft (NL)
(74) Representative: Jansen, Cornelis Marinus

(57) **Abstract**

The present invention relates to a new method for making fast cooking rice and/or other cereal grains comprising a first step of preparing rice and/or a rice product with a moisture content of 10 to 40%, characterized by adding water of 60 to 95°C to said rice and/or said rice product, and moisturing said rice or other cereal grain at a constant temperature equivalent to the temperature of the added water, until the moisture content of 10 to 40% is reached; and a second step characterized by drying the pre-moistured rice and/or a rice product to a residual moisture of lower than 14%; and a final cooling step to cool the treated rice and/or the rice product to room temperature or below.

## Description

### FIELD OF THE INVENTION

The present invention relates to methods for preparing food, more particularly more convenient food. In particular the invention relates to a method for preparing cereal grains, more particularly rice, especially fast cooking rice.

### BACKGROUND

According to the Food and Agriculture Organization of the United Nations, cereals constitute the main source of food for the world population with maize, rice and wheat having the highest annual production at 844, 672 and 651 million metric tons in 2010, respectively. Maize, rice and wheat together accounted for 87% of all grain production worldwide and 43% of all food calories. Thereof, rice is the largest food source of all grains for the world population.

It is known in the art that rice is cooked by boiling or steaming, and further absorbs water during cooking. It can be cooked in just as much water as it absorbs (the absorption method), or in a large quantity of water which is drained before serving (the rapid-boil method). Rice (or any other grain) is sometimes quickly fried in oil or fat before boiling, for example in saffron rice or risotto.

Moreover, rice may also be made into congee (also called rice porridge or rice gruel) by adding more water than usual, so that the cooked rice is saturated with water, usually to the point that it disintegrates. Rice porridge is commonly eaten as a breakfast food, and is also a traditional food for the sick. Further, rice may be soaked prior to cooking, which saves fuel, decreases cooking time, minimizes exposure to high temperature and decreases the stickiness of the rice. For some varieties, soaking improves the texture of the cooked rice by increasing expansion of the grains.

Parboiled rice is a popular form in some countries, in which the rice is subjected to a steaming or parboiling process while still a brown rice grain. This causes nutrients from the outer husk, especially thiamine, to move into the grain itself. The parboil process causes a gelatinisation of the starch in the grains. The grains become less brittle, and the colour of the milled grain changes from white to yellow. The rice is then dried, and can then be milled as usual or used as brown rice. Milled parboiled rice is nutritionally superior to standard milled rice. Parboiled rice has an additional benefit in that it does not stick to the pan during cooking, as happens when cooking regular white rice. However, in the manufacturing of parboiling rice a large amount of water is required until the moisture content of the rice amounts to 25-40%, the heating time is comparably long, e.g. 30 to 35 minutes or the temperatures applied are high according to British patent 493,528.

Alternatively, a nutritionally superior method of preparing brown rice known as GABA Rice or GBR (Germinated Brown Rice) may be used. This involves soaking washed brown rice for 20 hours in warm water (38 °C or 100 °F) prior to cooking it.

In the art, in principal two mayor types of cooked rice preparations are known, i.e. a wet-cooking rice or a dry-cooking rice, the former type forming a sticky glutinous mass and the latter type forming separate dry grains, which remain so to the palate and which should preferably have a fluffy outward appearance. The rice : water ratio is a matter of some judgment and in the preparation of large amounts of dry-cooking rice it is difficult to achieve a uniform distribution of the water and a caked, non-homogeneous mass which has burnt to the pan may result.

One type of fast cooking rice, nowadays commercially available as Lassie Toverrijst™ is still based on a treatment as described in GB 903,837 and BE 594,025. Said invention relates to a process for processing rice in order to obtain a rice of better dry-cooking quality, since said invention seeks to provide a type of rice which is capable of being cooked always to a dry product whatever the variation in cooking methods and even when very much water is used. In addition, GB 903,837 teaches a process to convert rice that is wet-cooking by nature into a dry-cooking rice and thereby to make it suitable for consumers who prefer a dry-cooking rice. This is achieved by a process for the preparation of dry-cooking rice grains, which process is characterized by the steps of pre-steaming rice for 15-20 minutes at a temperature of from 75 to 130°C, increasing its moisture content to 16-24% by weight by means of water or an aqueous solution, tempering the rice, heating it in live steam under a gauge pressure of from 0.3-1 atmospheres for at least 20 minutes and finally drying the rice.

In another example, Siam-rice having a moisture content of 12% was steamed for 2 minutes at 100°C. and thereafter mixed with a cold buffer solution haying a pH of 4.2 prepared from 0.1 molar citric acid solution and 0.2 molar disodium phosphate solution, so that the moisture content was raised to 21%. After tempering the rice was steamed for 4 minutes under a gauge pressure of 0.75 atmospheres with superheated steam (SHS), the rice reaching a temperature of 118°C. Basically, SHS and liquid water cannot coexist under thermodynamic equilibrium.

After this treatment the rice was dried.

For most rice consumptions, the normal cooking time amounts to about 18 to 25 minutes. Fast cooking rice differs from parboiled rice in that it is milled, fully cooked and then dried. With this pre-treatment, the actual cooking time is decreased significantly to about 7 to 15 minutes plus further 10 to 15 min of standing in hot condition, according to GB 903,837.

However, the art teaches that for the preparation of quick-cooking rice even more severe conditions are necessary than for parboiling rice, and in consequence a higher moisture content and longer steaming periods are employed. Thus, for example, U.K. patent 579,981 mentions a pre-cooking treatment in which a moisture content of from 65-70% is imparted to the rice. Another method is described in U.K. patent 737,446, according to which rice is soaked until it has a moisture content of about 25-30% and is steamed preferably at atmospheric pressure, i.e. a rice temperature of about 100°C.

Other pre-treatment methods described in the art do not considerably reduce this required time of preparation rice or rice products.

CN101991059 describes the preparation of an instant rice wherein the rice is boiled/steamed for 45 min in a pre-moisturing step, thus, harsh conditions of at least 100°C are applied. Afterwards, the cooked rice is drained and cooled, spread onto trays and dried in an oven at 99°C and an air flow of 5 m/s and an outlet temperature higher than 80°C. Thereby, the cooking time can be reduced to 8 min, which is in the previously mentioned range of 7 to 15 minutes, whereas a further waiting period is not specified.

CN102132835 describes an instant rice processing method, wherein the process uses freeze drying to achieve instant rice. The rice is rinsed, aged and loosened and then freeze dried. The method does not refer to a cooking step but the freeze drying is required to have temperatures far below 0 °C. No indication on the preparation time of said "instant" rice is provided.

HU9903220 refers to "quick cooking and instant rice" and to methods of making the same. Therein, parboiled rice is mechanically treated at a moisture content of 19-30 % to create micro fissures. Afterwards, the rice is dried and said final product is claimed to have a cooking time of about 5 min. However, this process uses parboiled rice as a starting material. As explained above, parboiled rice has already undergone an intensive process, i.e. it is steam treated at temperatures higher than 100 °C, often at pressures higher than atmospheric. Thus, HU9903220 in fact refers to a further process step that is added to an already existing process.

WO 88/01137 is directed to a non-aqueous processing of rice, wherein rice is adjusted to the appropriate water content, i.e. between 20 and 50% and then heated to a temperature in the range of 110 to 170 °C using a non-aqueous, organic liquid as heating medium. The desired effect is a gelatinization of starch.

CN101984852 refers to a method for preparing germinated brown rice nutritional instant rice. Therefore, soaked germinated brown rice is mixed with roasted black rice for cooking, i.e. subjection to temperatures above the boiling point of water, and scattering. Afterwards the mixture is dried.

In CN101524127, an instant rice processing method is described which prevents the volume of the rice from increasing in the "heating process" without referring to any details regarding heat-moisture treatment.

CN101164443 refers to a method for processing instant rice wherein dried rice is baked, modified, cooked, dispersed and vacuum dried. The named process steps including baking and cooking indicate temperatures above 100°. Moreover, the applied vacuum drying is associated with a water availability of below 0.5.

CN 101142986 is directed to a method for making instant rice which is made ready for cooking be soaking in water above 80 °C for 3 to 5 min. Process steps for the production include washing, stewing, leaching, dehydrating and drying. Stewing must be understood as temperatures above 100 °C, and leaching takes place in an environment with an excess of water.

CN102132826 refers to an industrialized production method for instant brown rice, wherein said process involves enzymatic technologies instead of heat-moisture treatments

In the art, modern rice cookers are known which can be set ahead by a timer, so that rice will be ready for a future time point, thus saving preparation time right in advance of the scheduled serving time. The rice cooker can also keep rice moist and warm. However, this does not provide flexibility since the quality is decreasing over time, the method is energy consuming and requires the additional purchase of said rice cooker.

Against this background of the various pre-treated rice preparation methods on the one hand and the fact, that the state-of-the-art regarding fast cooking rice has not changed considerably in over 50 years on the other hand, it is apparent that there is a strong need for an improved or at least alternative method to obtain fast cooking rice and/or rice products.

### SUMMARY OF THE INVENTION

In the present invention, it was surprisingly found that rice and/or another cereal grain subjected to a method comprising alternating moistening and drying steps has a shorter cooking time. Hencethe inventors now have devised a method that is able to overcome the above-mentioned difficulties. In a first aspect, the invention comprises a method for making fast cooking rice and/or other cereal grains comprising the following consecutive steps:
a) a first step of preparing rice and/or other cereal grains with a moisture content of 10 to 40%, characterized by adding water to said rice and/or other cereal grain, and hydrating said rice and/or said other cereal grains at a temperature between 60-95 °C, until the moisture content of 10 to 40% is reached; and
b) a second step characterized by drying the pre-moistured rice and/or other cereal grains at temperatures between 60 and 95 °C at an a_{w} between 0.4 and 0.8 to a residual moisture less than 14%; and
c) a cooling step to cool the treated rice and/or other cereal grains to temperatures suitable for packing and storage.

In a further embodiment, the invention relates to a method, wherein in the first step the rice and/or other cereal grain is hydrated for 10 to 120 minutes, preferably for 30 to 60 minutes, more preferably for about 40 minutes.

In another embodiment the invention relates to a method in which salts, buffers, acids and/or other nutritional acceptable compounds are added to the water in the first step.

In still another further embodiment, the second step is performed at a controlled water activity (a_{w}) of 0.45 to 0.7, preferably at 0.5.

In a preferred embodiment, the second step is characterized by temperatures of 60 to 95 °C, preferably 80 to 90 °C, and most preferably about 85 °C.

In yet another preferred embodiment, the second step is applied to the rice and/or the rice product for 1 to 6 hours, preferably for 3 h hours.

In another preferred embodiment, several hydrating and drying step might be applied, resulting in a multistep process with alternating hydrating and drying phases.

In a further preferred embodiment, the fast cooking rice and/or other cereal grains has a cooking time of 5 minutes or less than 5 minutes.

In yet still another preferred embodiment, the fast cooking rice and/or the fast cooking rice product has a residual moisture after the drying step of less than 20%, more preferable less than 14%.

In a preferred embodiment, the edible rice is a subspecies or cultivar of *Oryza sativa L or Oryza glaberrima* Staud.

In another preferred embodiment, the fast cooking cereal grain product is selected from cultivars of species of the family Poaceae.

In a second aspect, a product prepared by the process of any of the aforementioned method is characterized by structural characteristics allowing fast cooking of the product.

In a further embodiment of said aspect, the product has organoleptic properties selected from the group, such as taste, texture and stickiness, which are similar to the organoleptic properties of non-fast cooking rice and/or other cereal grain.

### DESCRIPTION OF THE FIGURES

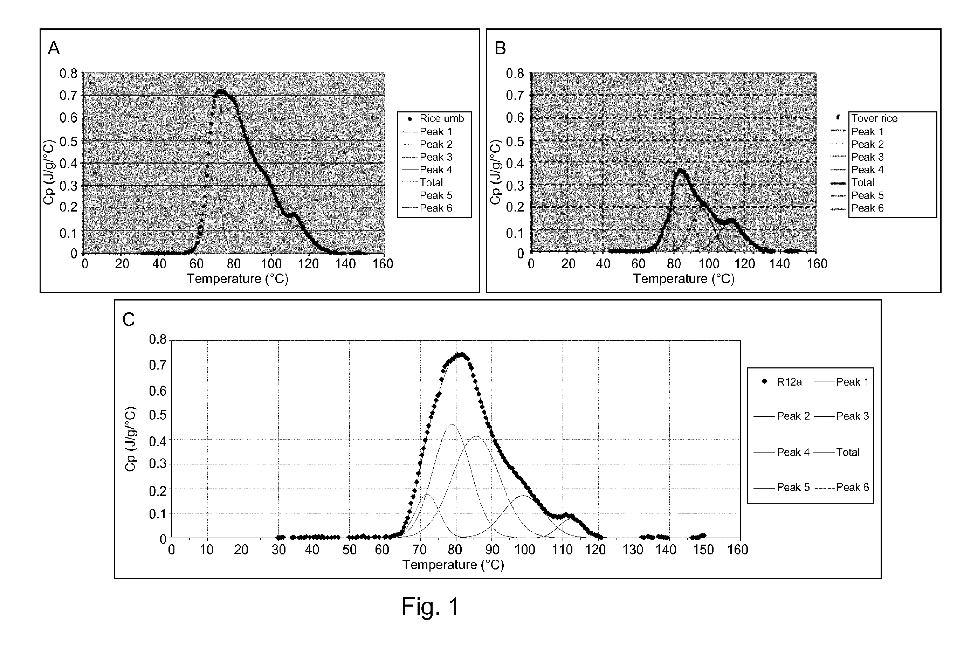

- Figure 1:: Differential Scanning Calorimetry (DSC) curve of white rice (a), Toverrijst ™ (b) and a sample processed with the newly invented process for example 1 (c)

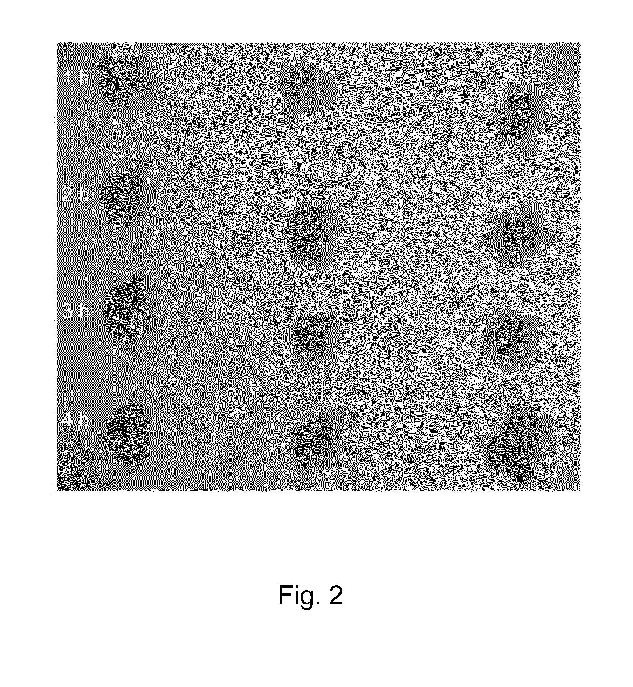

- Figure 2:: Browning of rice as an effect of heating in an oven (95 °C, a_{w}: 0.8) for 1 to 4 h, depending on the initial water content

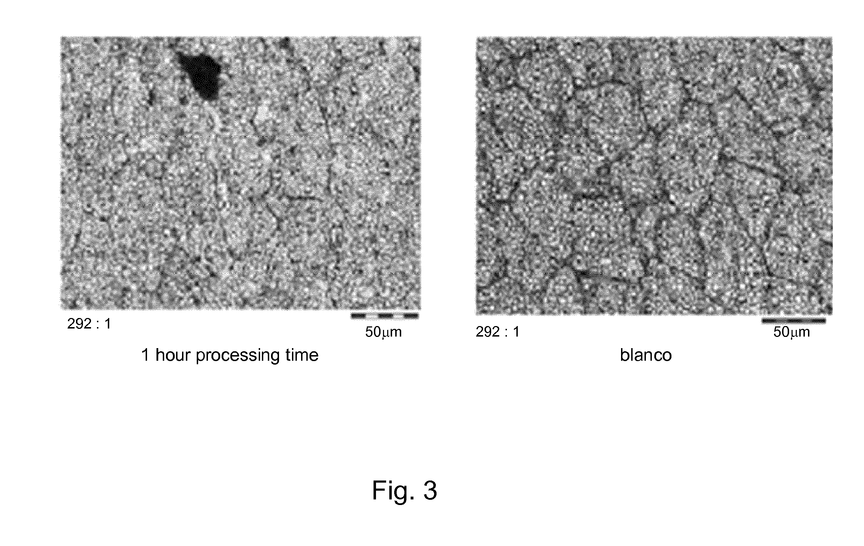

- Figure 3:: Visualization of rice proteins with Ponceau S, before and after heat moisture treatment
- Figure 4:: Differential Scanning Calorimetry (DSC) curve of white rice (a), Toverrijst ™ (b) and a sample processed with the newly invented process for example 2 (c)
- Figure 5:: Browning of rice as an effect of heating in an oven (95 °C, a_{w}: 0.5) for 1 to 4 h, depending on the initial water content
- Figure 6:: Visualization of rice proteins with Ponceau S, before and after heat moisture treatment

### DETAILED DESCRIPTION

In the present description the following definitions are used. "Instant" or "fast-cooking" rice or rice product is defined as a rice (or other cereal grain) that has a shorter cooking time than rice (or other cereal grain) of the same variety that has not been pre-treated. Generally the shorter cooking time of such a rice (or rice product) lies between 7 and 12 minutes (in the case of Lassie Toverrijst™ which is taken as the gold standard for fast-cooking rice). As will be seen below, for the present invention a fast-cooking rice which is cooked ready in less than 5 minutes is possible.

"Water activity" or a_{w} is developed to account for the intensity with which water associates with various non-aqueous constituents and solids. Simply stated, it is a measure of the energy status of the water in a system. It is defined as the vapor pressure of a liquid divided by that of pure water at the same temperature; therefore, pure distilled water has a water activity of exactly one.

"Moisturising", "hydration" or "steeping" as used in the present description is a process in which a material is soaked in a liquid, resulting in a material with increased liquid content. Such a process may also be indicated by the words "soaking" or "drenching". In particular in the present invention, the moisturising step is performed at elevated temperatures, i.e. temperatures higher than room temperature.

The present invention offers a solution for the problem of the lack of a method to prepare fast-cooking rice which is mild to the nutritious ingredients, preserving the flavor and other sensory properties as well as energy efficient. In particular, the invention refers to a method comprising subsequent steeping and drying steps followed by a cooling step. The described process results in structural changes in the rice or other cereal grain which in turn determine the cooking time of the finished product. Preferably, the steeping steps of the process in the present invention have a total duration of 10 to 120 minutes, more preferably 30 to 60 minutes, even more preferably about 40 minutes. The particular conditions are mild in comparison to the prior art which relies on processes involving, for example, temperatures above the boiling point of water and high or low pressure.

Moreover, the second heat-moisture treatment step preferably is characterized by a controlled water activity (a_{w}) of 0.4 to 0.8, preferably a water activity of 0.45 to 0.7, more preferably a water activity of about 0.5. The required a_{w} is maintained by heating the air to the required temperature and spraying water to reach the desired aw and/or recirculating the air which has the relevant a_{w}.

By the newly found method, a near-instant rice or rice product is obtained. The new method obviates the need to apply a heat intensive cooking/boiling step. The drying step controlled by a_{w} is simple and less energy consuming than processes commonly applied in the making of instant products, such as vacuum drying or freeze drying.

The second step of the method of the present invention preferably is performed a temperature of 60 to 95 °C, preferably 80 to 90°C, and most preferably at a temperature of about 85°C. This second step preferably lasts 1 to 6 hours, more preferably 2 to 5 hours, more preferably about 3 hours. Preferably the rice or rice product will have a residual moisture level after this drying below 14%.

The skilled person will further appreciate that the method of the present invention involving comparably mild process temperatures, which are below those of standard processes taught in the art since decades, results in less degradation of delicate nutritious ingredients such as vitamins, especially B vitamins and other phytonutrients.

The superior cooking performance in means of cooking time and sensory studies of rice and other cereal grains which have undergone a defined heat-moisture treatment according to the present invention confirmed the eligibility of the present method. Less than 5 minutes of cooking time while maintaining acceptable organoleptic properties were achieved with the aforementioned conditions in the two-step heat-moisture treatment method of the invention.

It is the current theory that the controlled heat-moisture treatment method of the present invention affects the cell walls within the rice kernel, which then loses its structure. Consequently, the present method preferably enables a faster penetration of moisture and energy into the rice and/or rice product, resulting in a shorter cooking period. Several different analyses have been developed in order to track the physical changes of the rice kernel, which are induced by the heat moisture treatment.

To that effect, in a first step of the present method, rice and/or a rice product with a moisture content of 10 to 40%, preferably 20 to 30% and most preferably 20 or 28% is prepared. In order to obtain such a moisture level, water of 60 to 95 °C, preferably 75 to 85°C and most preferably of 80°C is added to said rice and/or said other cereal grain , and said rice and/or said other cereal grain is moistened at a constant temperature equivalent to the temperature of the added water, until the set moisture level is reached.

Advantageously, in a subsequent second step the pre-hydrated rice or other cereal grain is dried to a residual moisture of below 14%

In a concluding cooling step, the treated rice and/or other cereal grain is cooled to a temperature suitable for packaging and storage.

The water or aqueous solution applied in the first hydrating step is preferably supplemented with salts, buffers, acids, and/or other nutritional acceptable compounds, preferably not in such excess to result in a hypertonic solution.

Reduction of the water content in the product is necessary, since it was presently found that high water contents in the sample are negative as browning reactions can be caused by burning of material or the occurrence of Maillard reactions. As known in the art, Maillard reactions are amongst others depending on available water and are likely the main cause for the colour development observed in this experiment. High initial water content, but also a higher a_{w} during the treatment, result in a long period of water availability for such reactions.

Due to the application of the method of the present invention, macroscopic cracks occurred which might be a cause for the faster cooking of heat treated rice kernels or related products.

Hence, the present inventive method provides rice and/or other cereal grain with time and cost benefit and less environmental impact both by the preparation of the pre-treated product as well as by the final - shortened - preparation by the consumer.

Also part of the invention is the rice or other cereal grain which is prepared with a process according to the invention. Such a product is not only characterized by the feature that it has an extremely short cooking time (less than 5 minutes), but it is also characterized by the above discussed structural characteristics of the rice kernel. Additionally, further structural characteristics are supplied in the below presented experimental data.

Other cereal grains are selected from the family of Poaceae, which family comprises, amongst others, the grain crops wheat, oat, rye, millet, sorghum, corn and barley.

The present invention will now be further described in greater detail by reference to the following specific examples, which should not be construed as in any way limiting the scope of the invention.

### EXAMPLES

### Example 1

To 500g white rice, weighed into a Rotavapor flask, 37.5ml water was added in order to obtain a moisture level of 20%. The flask was held at 80 °C in a temperature-controlled water bath for 60 min and constantly agitated.

In the second step the hydrated rice was heated on sieves at 85 °C for 1, 2, 3 and 4 hours, respectively in an oven (Weiss Umwelttechnik, Germany) with controlled water activity (a_{w}) of 0.5.

Phase transitions were measured by use of Differential Scanning Colorimetry (DSC). Ground rice samples of about 10mg were weighed into medium pressure stainless steel cups. Demineralized water was added to the samples such that the dry matter based moisture content was 80%. The cups were closed and samples were conditioned at room temperature. After placing the samples into the DSC instrument they were equilibrated at 2 °C after which the heat flow was measured from 2 °C to 160 °C at a linear scanning rate of 7.5 °C/min.

Light microscopy was used to visualise structural changes of the proteins in the cell wall structure within the rice kernel. Rice samples were first fixated in formaldehyde for 48 hours. The samples were dewatered via extraction in ethanol. Under vacuum, the ethanol was replaced by paraffin and put in a template. 4µm slides were prepared and placed on an object glass. Ponceau S was used to colorize the proteins (formation of a red colored complex), which are localised in the cell wall structure. Images were made by use of a stereo microscope SZX9 Olympus. Final moisture level was determined at 130 °C by use of an infrared balance

### (Sartorius)

Sensory analyses were performed during the cooking the rice. Therefore 100 g of rice was added into 1 liter of boiling water. In function of cooking time, samples were taken out of the rice suspension for evaluation. A sensory panel judged on appearance, bite and taste of the cooked rice sample.

Colour development was judged before and after cooking.

### Results

### 1. Final moisture level

| Reaction time | Final moisture level |
|---|---|
| 1h | 10,3 |
| 2h | 9 |
| 3h | 8.5 |
| 4h | 7.9 |

### 2. DSC

The differences between unprocessed white rice and Toverrijst ™ are that the latter requires less heat input for phase transition in the DSC due to conformation changes during the heat moisture process. The sample processed with the newly invented process has a similar profile as the white rice. The short cooking time is therefore not reached with the same mechanism as in the older processes (e.g. Toverrijst ™)

### 3. Colour development

The impact of the variances in original water content, processing time and a_{w} on the colour of the rice samples is shown in the figure below. Colour development was increased by high initial water content, long processing times and high a_{w} At 20% initial water, colour development was very limited; after 1 h of heat treatment, little discoloration was seen.

### 4. Microscopy

Microscopic images indicate that the cell wall loses its structure during treatment. This might be an explanation for the reduction of the cooking time .

### 5. Organoleptic properties

Selected samples (1 and 2 hours reaction time) were cooked for assessment of sensory characteristics, e.g taste, bite. Cooking times less than 5 min.were found, having the same performance as Toverrijst after 8 minutes boiling or white rice after 15 min, of boiling. No differences in colour, after cooking between Toverrijst and the selected samples could be detected.

### Example 2

To 500g white rice, weighed into a Rotavapor flask, 37.5ml water was added in order to obtain a moisture level of 20%. The flask was held at 80 °C in a temperature-controlled water bath for 60 min and constantly agitated.

In the second step the hydrated rice was heated on sieves at 85 °C for 1, 2, 3 and 4 hours, respectively in an oven (Weiss Umwelttechnik, Germany) with controlled water activity (a_{w}) of 0.8.

Phase transitions were measured by use of Differential Scanning Colorimetry (DSC). Ground rice samples of about 10mg were weighed into medium pressure stainless steel cups. Demineralized water was added to the samples such that the dry matter_based moisture content was 80%. The cups were closed and samples were conditioned at room temperature. After placing the samples into the DSC instrument they were equilibrated at 2 °C after which the heat flow was measured from 2 °C to 160 °C at a linear scanning rate of 7.5 °C/min.

Light microscopy was used to visualise structural changes of the proteins in the cell wall structure within the rice kernel. Rice samples were first fixated in formaldehyde for 48 hours. The samples were dewatered via extraction in ethanol. Under vacuum, the ethanol was replaced by paraffin and put in a template. 4µm slides were prepared and placed on an object glass. Ponceau S was used to colorize the proteins (formation of a red coloured complex), which are localised in the cell wall structure. Images were made by use of a stereo microscope SZX9 Olympus. Final moisture level was determined at 130 °C by use of an infrared balance (Sartorius)

Sensory analyses were performed during the cooking the rice. Therefore 100 g of rice was added into 1 liter of boiling water. In function of cooking time, samples were taken out of the rice suspension for evaluation. A sensory panel judged on appearance, bite and taste of the cooked rice sample.

Colour development was judged before and after cooking.

### Results

### 1. Final moisture level

| Reaction time | Final moisture level |
|---|---|
| 1h | 10 |
| 2h | 8 |
| 3h | 7 |
| 4h | 6.5 |

### 2. DSC

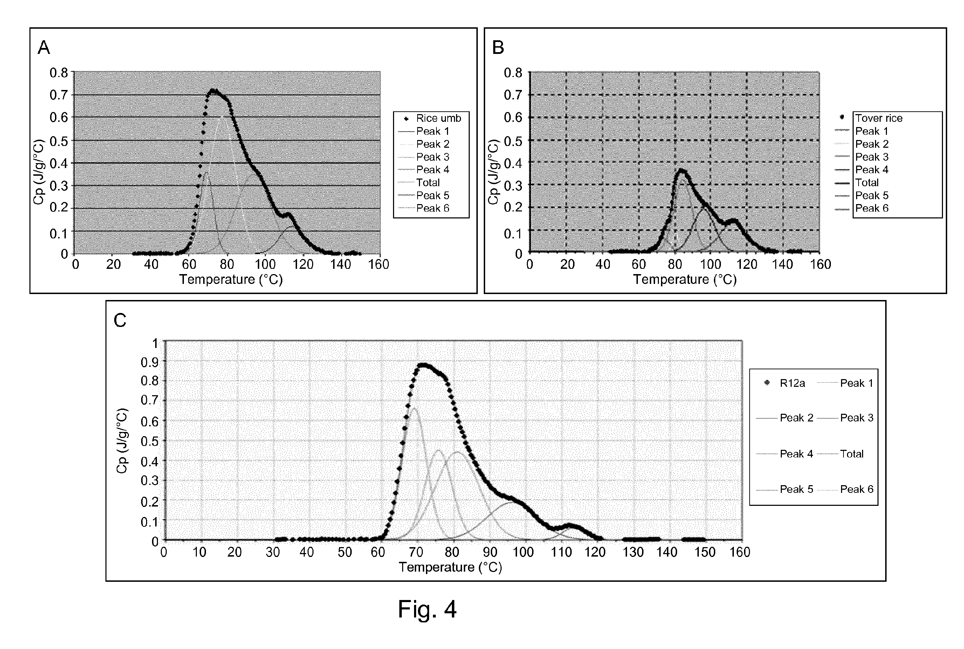

Similar observations were made as for example 1 (See Figure 4).

### 3. Colour development

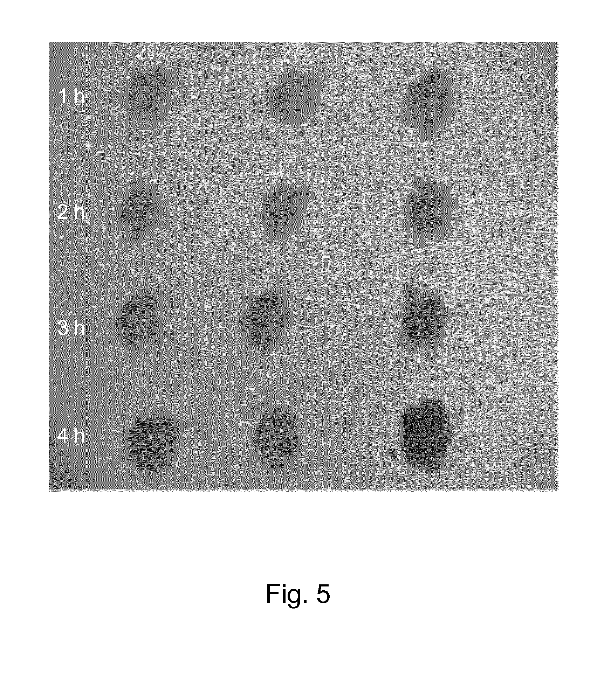

Similar tendencies were found as for example 1: As shown in Fig. 5 colour development was increased by high initial water content, long processing times and high aw. At 20% initial water, colour development was very limited; after 1 h of heat treatment, little discoloration was seen.

### 4. Microscopy

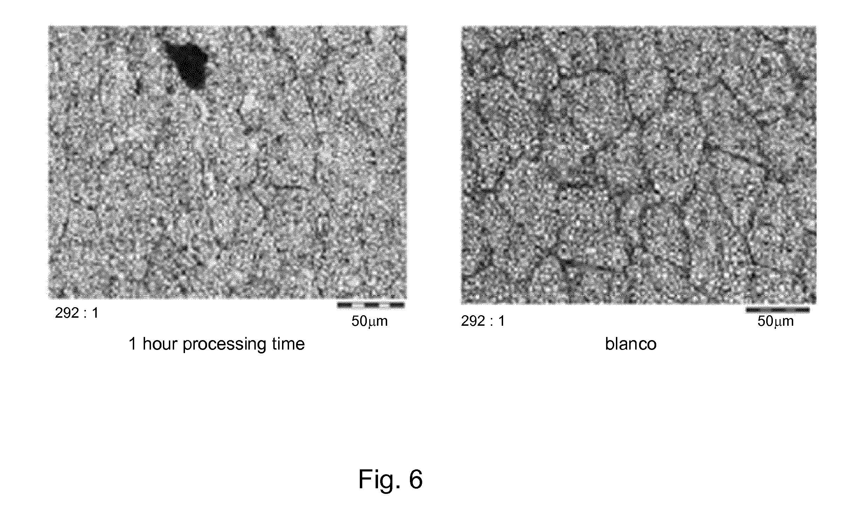

Similar tendencies can be found as for example 1. It seems that due to the process the cell wall structure loses its structure. It is suspected that this is the reason for the reduction of the cooking time (Figure 6).

### 5. Organoleptic properties

Also for the organoleptic properties similar tendencies were found as observed in example 1.

Selected samples (3 and 4 hours reaction time) were cooked for assessment of sensory characteristics, e.g. taste, bite. Cooking times less than 5 min. were found, having the same performance as Toverrijst after 8 minutes boiling or white rice after 15 min, of boiling. No differences in colour, after cooking up between Toverrijst and the selected samples could be detected.

## Claims

1. A method for making fast cooking rice and/or another fast cooking cereal grain comprising the following consecutive steps:
a) a first step of preparing rice and/or other cereal grain with a moisture content of 10 to 40%, **characterized by** adding water to said rice and/or other cereal grain, and hydrating said rice and/or said other cereal grain at a temperature between 60-95 °C, until the moisture content of 10 to 40% is reached; and
b) a second step **characterized by** drying the pre-moistured rice and/or a rice product at temperatures between 60 and 95 °C at a a_{w} between 0.4 and 0.8 to a residual moisture below 14% and
c) a cooling step to cool the treated rice and/or the rice product to room temperature or below.

2. The method of claim 1, wherein in the first step the rice and/or the rice product is hydrated for 10 to 120 minutes, preferably for 30 to 60 minutes, more preferably for about 40 minutes.

3. The method of claim 1 or 2, wherein salts, buffers, acids and/or other nutritional acceptable compounds are added to the water in the first step.

4. The method of any of claims 1 to 3, wherein the second step is performed at a controlled water activity (a_{w}) of 0.4 to 0.8, preferably at 0.5.

5. The method of any of claims 1 to 4, wherein the second step is **characterized by** temperatures of 60 to 95 °C, preferably 80 to 90 °C, and most preferably 85 °C.

6. The method of any of claims 1 to 5, wherein the second step is applied to the rice and/or other cereal grains for 1 to 6 hours, preferably for 3 h hours.

7. The method of any claims 1 to 6, wherein multiple hydrating and drying steps are alternated.

8. The method of any of claims 1 to 7, wherein the fast cooking rice and/or other cereal grain has a cooking time of 5 minutes or less than 5 minutes.

9. The method of any of claims 1 to 8, wherein the fast cooking rice and/or the fast cooking rice product has a residual moisture after the drying step of lower than 14%.

10. The method of any of claims 1 to 9, wherein the edible rice is selected from the species *Oryzα sativa* L. or *Oryza glaberrima* Steud.

11. The method of any of claims 1 to 9, wherein the fast cooking cereal grain is selected from the group consisting species of the family Poaceae.

12. A product prepared by the process of any of claims 1 to 11, wherein the product is **characterized by** structural characteristics allowing fast cooking of the product.

13. The product of claim 12, wherein the product has organoleptic properties selected from the group consisting of taste and texture, which do not fall behind the organoleptic properties of non-fast cooking rice and/or other cereal grains.
